# EUROPEAN PATENT APPLICATION

(11) **EP 4 851 502 A1**
(43) Date of publication of application: **09.12.2026**
(21) Application number: 26181585.6
(22) Date of filing: 28.05.2026
(51) Int. Cl.: F16H 63/18, F16H 61/00

(54) **VEHICLE**

(30) Priority: 30.05.2025 JP 2025091033
(71) Applicant: Yamaha Hatsudoki Kabushiki Kaisha, Iwata-shi, Shizuoka 438-8501 (JP)
(72) Inventor: Hatori, Takuto, Iwata-shi, Shizuoka, 438-8501 (JP); Hirose, Ryotaro, Iwata-shi, Shizuoka, 438-8501 (JP)
(74) Representative: Grünecker Patent- und Rechtsanwälte PartG mbB

(57) **Abstract**

A vehicle that allows locking of a driving wheel when an engine is stopped, even with a normally open clutch mounted, is provided.

The vehicle includes an engine (10), a driving wheel (20), a normally open clutch (30), and a single transmission (40).

The single transmission includes a single main shaft (41a), a single drive shaft (41b), a plurality of gear sets, and a shift cam (42) that is a rotating body having a cam groove formed in a shift region on a cylindrical surface and that causes a gear set of one gear stage, which corresponds to the position of the cam groove at a predetermined rotation angle, to be in an engaged state, wherein the cam groove extends up to a lock region adjacent to the shift region and extending from the shift region, and in the lock region, the cam groove is formed to extend up to the lock region so as to cause the gear sets corresponding to two or more gear stages among the plurality of gear stages provided in the single transmission to be in the engaged state.

## Description

The present teaching relates to a vehicle.

For example, in JP 2016-161065 A, a control of a transmission that can fix the driving wheel is described. The vehicle in JP 2016-161065 A includes a first transmission mechanism responsible for odd-numbered gear stages and a second transmission mechanism responsible for even-numbered gear stages. The first transmission mechanism includes a first input shaft that receives a driving force of an engine and a first clutch that switches the presence or absence of transmission of the driving force. Further, the second transmission mechanism includes a second input shaft that receives the driving force of the engine and a second clutch that switches the presence or absence of the transmission of the driving force.

The first transmission mechanism and the second transmission mechanism in JP 2016-161065 A are independent transmission mechanisms including mutually independent input shafts. The first transmission mechanism and the second transmission mechanism are connected through two clutches. The first transmission mechanism and the second transmission mechanism share a countershaft as an output shaft. The first clutch and the second clutch are hydraulic clutches, and are normally open clutches that enter a disengaged state when there is no supply of hydraulic pressure as an external force.

A control unit of JP 2016-161065 A performs a control to engage both the first clutch and the second clutch while engaging one of the gear stages of the first transmission mechanism and one of the gear stages of the second transmission mechanism. The driving wheel can be locked under the control of the control unit.

In a vehicle with a normally open clutch mounted, there may be a case in which a vehicle capable of locking the driving wheel when the engine is stopped is desired.

The vehicle in JP 2016-161065 A utilizes a configuration including a first transmission mechanism and a second transmission mechanism that can select gear stages independently from each other. The control of JP 2016-161065 A allows the driving wheel to be locked only after engaging one gear stage with the first transmission mechanism, engaging one gear stage with the second transmission mechanism, and further engaging the clutch.

However, in the vehicle of JP 2016-161065 A, when the engine stops, hydraulic pressure is no longer supplied to the first clutch and the second clutch. The first clutch and the second clutch, which are normally open clutches, enter a disengaged state when the engine stops, and the lock of the driving wheel is released. Note that the technology of JP 2016-161065 A is an auxiliary measure in a case in which a parking lock mechanism does not operate normally, and the technology can satisfy its function on the premise that the engine operates.

An object of the present teaching is to provide a vehicle that allows locking of a driving wheel when the engine is stopped, even with a normally open clutch mounted.

According to the present invention said object is solved by a vehicle having the features of independent claim 1. Preferred embodiments are laid down in the dependent claims.

A vehicle includes a single transmission, and the single transmission includes a single main shaft, a single drive shaft, a plurality of gear sets, and a shift cam. The shift cam has a cam groove formed to extend in a shift region and up to a lock region adjacent to the shift region. The cam groove formed in the shift region causes a gear set of one or less gear stages to be in the engaged state. The cam groove extending in the lock region causes gear sets corresponding to two or more gear stages to be in the engaged state.

When the shift cam rotates so that the selection position of the gear stage shifts from the shift region to the lock region, the gear sets corresponding to two or more gear stages enter the engaged state according to the position of the cam groove in the lock region. Therefore, in the single transmission, the single main shaft and the single drive shaft are coupled through two or more gear sets having different gear ratios. Therefore, the rotations of the single main shaft and the single drive shaft are locked. The rotations of the single main shaft and the single drive shaft are locked even when the normally open clutch is in the disengaged state. By the drive shaft being locked, the driving wheel is locked regardless of the operation of the engine.

Therefore, even with the normally open clutch mounted, it is possible to lock the driving wheel when the engine is stopped.

In order to achieve the above objectives, according to one aspect of the present teaching, a vehicle includes the following structure.
(1) A vehicle,
   the vehicle includes:
   an engine that outputs a drive torque;
   a driving wheel that rotates by receiving the drive torque of the engine;
   a normally open clutch connected to the engine, the normally open clutch entering an engaged state that transmits the drive torque output from the engine when an external force is received and entering a disengaged state when the external force disappears;
   a single transmission connected to the normally open clutch, which converts a magnitude of the drive torque transmitted by the normally open clutch at a ratio according to a gear stage selected from a plurality of gear stages, and outputs the converted magnitude of drive torque to the driving wheel,
   wherein the single transmission includes
   a single main shaft connected to the normally open clutch and receiving the drive torque from the normally open clutch,
   a single drive shaft that outputs the converted magnitude of the drive torque to the driving wheel,
   a plurality of gear sets provided so as to respectively correspond to the plurality of gear stages, each of the plurality of gear sets including a main gear provided on the single main shaft and a drive gear provided on the single drive shaft, and
   a shift cam that is a rotating body having a cam groove formed in a shift region on a cylindrical surface, the shift cam causing a gear set of one or less gear stages, among the plurality of gear stages, which corresponds to the position of the cam groove at a predetermined rotation angle to be in an engaged state, and
   wherein the cam groove extends up to a lock region adjacent to the shift region and extended from the shift region, and in the lock region, the cam groove is formed to extend up to the lock region so as to cause the gear sets corresponding to two or more gear stages among the plurality of gear stages provided in the single transmission to be in the engaged state.

The vehicle according to (1) includes an engine, a driving wheel, a normally open clutch, and a single transmission.

The engine outputs a drive torque. The driving wheel rotates by receiving the drive torque of the engine. The normally open clutch is connected to the engine. Then, the normally open clutch, by receiving an external force, enters an engaged state in which the normally open clutch transmits the drive torque output from the engine. The normally open clutch enters a disengaged state when the external force disappears.

The single transmission is connected to the clutch. The single transmission converts a magnitude of the drive torque transmitted by the clutch at a ratio corresponding to a gear stage selected from a plurality of gear stages. In other words, the single transmission can also be said to convert a speed of rotation transmitted by the clutch at a ratio corresponding to a gear stage. The single transmission outputs the converted drive torque to the driving wheel.

The single transmission includes a single main shaft, a single drive shaft, a plurality of gear sets, and a shift cam.

The single main shaft is connected to the clutch. The single main shaft receives a drive torque from the clutch. The single drive shaft outputs a converted drive torque to the driving wheel.

The plurality of gear sets are provided corresponding to each of the plurality of gear stages. Each of the plurality of gear sets includes a main gear and a drive gear. The main gear is provided on the single main shaft. The drive gear is provided on the single drive shaft.

The shift cam is a rotating body. The shift cam has a cylindrical surface, and in a shift region on the cylindrical surface, a cam groove is formed. The shift cam causes a gear set of one or less gear stages corresponding to the position of the cam groove in the shift region at a predetermined rotation angle to be in an engaged state. By one gear set entering the engaged state, the corresponding gear stage is selected. That is, the drive torque is transmitted and converted at the corresponding gear stage. The cam groove in the shift region may also cause a gear set to be in a neutral state without entering the engaged state. The cam grooves of the shift cam extend up to the lock region. The lock region is a region adjacent to the shift region on the cylindrical surface. The cam groove in the lock region causes gear sets corresponding to two or more gear stages among the plurality of gear stages to be in the engaged state simultaneously. The cam groove extends up to the lock region so as to cause gear sets corresponding to two or more gear stages among the plurality of gear stages to be in the engaged state.

When the shift cam rotates so that the selection position of the gear stage moves/shifts from the shift region to the lock region, the gear sets corresponding to two or more gear stages enter the engaged state simultaneously according to the position of the cam groove in the lock region. Therefore, in the single transmission, the single main shaft and the single drive shaft are coupled through two or more gear sets having different gear ratios. Therefore, the rotations of the single main shaft and the single drive shaft are locked. The rotations of the single main shaft and the single drive shaft are locked even when the normally open clutch is in the disengaged state. By the drive shaft being locked, the driving wheel is locked regardless of the presence or absence of operation of the engine. Therefore, even with the normally open clutch mounted, it is possible to lock the driving wheel when the engine is stopped.

According to one aspect of the present teaching, a vehicle can employ the following configurations.
(2) The vehicle according to (1), such that
the normally open clutch is a centrifugal clutch.

The centrifugal clutch enters the engaged state to transmit the drive torque when the rotation speed of the engine exceeds a certain value, and enters the disengaged state when the rotation speed falls below a certain value. A centrifugal clutch can achieve a normally open clutch without a large and heavy mechanism such as a hydraulic mechanism or an electric actuator, for example. According to (2), locking of the driving wheel when the engine is stopped becomes possible, even when the vehicle includes a lightweight centrifugal clutch.

According to one aspect of the present teaching, a vehicle can employ the following configurations.
(3) The vehicle according to (2), such that
the centrifugal clutch is arranged coaxially with the single main shaft.

When the centrifugal clutch is arranged coaxially with the single main shaft, the centrifugal clutch is positioned on a shaft different from the crankshaft of the engine. In this case, the centrifugal clutch can be configured to rotate at a rotation speed that is subjected to primary reduction relative to the crankshaft. For this reason, using an increase in the rotation speed of the centrifugal clutch, which is lower than the crankshaft of the engine, as a reference, the disengaged state of the centrifugal clutch can be maintained for a longer time. As a result, wear of the centrifugal clutch and wear of the single transmission can be suppressed.

According to one aspect of the present teaching, a vehicle can employ the following configurations.
(4) The vehicle according to any one of (1) to (3), such that
the cam groove, in the lock region, extends and is formed up to the lock region so as to cause the gear sets corresponding to two or more gear stages including a first speed among the plurality of gear stages to be in the engaged state.

The first speed in the single transmission has a maximum gear ratio in the single transmission. By the gear set corresponding to the gear stages including the first speed, which has the maximum gear ratio, entering the engaged state at the time of locking, the locking of the driving wheel becomes stronger.

According to one aspect of the present teaching, a vehicle can employ the following configurations.
(5) The vehicle according to any one of (1) to (4), such that
the cam groove in the lock region extends from a position corresponding to a lowest gear stage in the shift region.

According to (5), when a shift down operation is performed in the single transmission, the driving wheel is locked in an operation subsequent to the lowest gear stage. Therefore, when the vehicle stops, the driving wheel can be locked as an extension of the normal shift down operation. The single transmission may be a type in which, for example, the lowest gear stage is the first speed, or a type in which, for example, the lowest gear stage is neutral.

According to one aspect of the present teaching, a vehicle can employ the following configurations.
(6) The vehicle according to any one of (1) to (5), such that
the vehicle is a straddled vehicle.

The straddled vehicle is a form of vehicle in which the driver sits astride the saddle. The straddled vehicle turns with movement of a posture of the driver. The straddled vehicle is desired to be small and lightweight for light operability. The vehicle according to (6) can achieve locking of the driving wheel when the engine is stopped, even with the lightweight normally open clutch mounted.

The terminology used herein is for defining particular embodiments only and is not intended to be limiting the teaching. As used herein, the term "and/or" includes any and all combinations of one or more of the associated listed items. As used herein, the terms "including", "comprising", or "having", and variations thereof specify the presence of stated features, steps, operations, elements, components, and/or equivalents thereof, and can include one or more of steps, operations, elements, components, and/or their groups. As used herein, the terms "attached", "connected", "coupled", and/or equivalents thereof are used in a broad sense, and include both direct and indirect attachment, connection, and coupling. Further, "connected" and "coupled" are not limited to physical or mechanical connections or couplings, and may include direct or indirect electrical connections or couplings. Unless otherwise defined, all terms (including technical and scientific terms) used herein have the same meaning as commonly understood by one of ordinary skill in the art to which the present teaching belongs. It will be further understood that terms, such as those defined in commonly used dictionaries, should be interpreted as having a meaning that is consistent with their meaning in the context of the present disclosure and relevant art and should not be interpreted in an idealized or overly formal sense unless expressly so defined herein. It will be understood that the description of the present teaching discloses many techniques and steps. Each of these has individual benefit and each can also be used in conjunction with one or more, or in some cases all, of the other disclosed techniques. Accordingly, for the sake of clarity, this description will refrain from repeating every possible combination of the individual steps in an unnecessary fashion. Nevertheless, Description and Claims should be read with the understanding that such combinations are entirely within the scope of the present teaching and the claims.

This Description describes a novel vehicle. In the description given below, for the purposes of explanation, numerous specific details are set forth in order to provide a thorough understanding of the present teaching. It will be apparent, however, that those skilled in the art may practice the present teaching without these specific details. The present disclosure is to be considered as an exemplification of the present teaching, and is not intended to limit the present teaching to the specific embodiments illustrated by drawings or descriptions below.

The vehicle is, for example, a four-wheeled vehicle having a cabin. However, the vehicle is not particularly limited and may be, for example, a straddled vehicle. A straddled vehicle is a form of vehicle in which the driver sits astride the saddle. A straddled vehicle is configured to turn with movement of the body weight of the driver, thus requiring light operability.

A straddled vehicle is, for example, a lean vehicle. The lean vehicle is a straddled vehicle configured to turn in a lean posture. The lean vehicle is configured to turn in a posture tilted toward the center of a curve. As a result, the vehicle configured to turn in a lean posture counteracts the centrifugal force acting on the vehicle during the turn. The straddled vehicle or the lean vehicle is not particularly limited, and for example, the straddled vehicle or the lean vehicle may be an on-road type, a scooter type, a moped type, or even a motor tricycle.

Further, for example, the vehicle is not provided with a torque converter that utilizes a hydrodynamic action of a fluid in a power transmission path from a power source to a propulsion device. In other words, the single transmission is connected to the engine through the normally open clutch without a torque converter.

The operation of the engine is that the engine outputs a driving force generated by combustion as torque and a rotation speed of the crankshaft.

Outputting torque to the driving wheel means that the torque output from the single transmission is ultimately supplied to the driving wheel through mechanisms such as, for example, a drive shaft, a differential gear, a belt, or a chain.

The normally open clutch is, for example, a hydraulic clutch. However, the normally open clutch is not particularly limited, and for example, the normally open clutch may be an electric clutch that obtains a force from an electric actuator, or a centrifugal clutch that uses the driving force from the engine as an external force.

A single transmission includes, for example, a constant-mesh transmission in which a driving gear in each of all gear sets meshes with a driven gear, and dogs corresponding to one gear stage meshes. Each of the plurality of gear sets in the single transmission includes a main gear and a drive gear. Each of the plurality of gear sets is not particularly limited, and may have, for example, a dog mechanism that switches the presence or absence of transmission of torque between shafts. For example, the operation of the dog mechanism switches the engaged state of each gear set. Further, the single transmission may be provided with, for example, a synchromesh mechanism.

The single transmission can select one gear stage from, for example, six gear stages. However, the number of gear stages that the single transmission has is not particularly limited and may be, for example, three, four, five, or seven. The shift cam causing a gear set of one or less gear stages to be in an engaged state encompasses causing a gear set of one gear stage to enter the engaged state depending on a rotational position of the shift cam, and also encompasses causing a neutral state in which none of the gear sets of any of the gear stages enters the engaged state. The single transmission is, for example, a bottom-low type in which neutral is positioned between a first speed and a second speed in an order of gear stage operation. However, an arrangement of the gear stages is not particularly limited, and may be, for example, a bottom-neutral type. In a case of the bottom-neutral type, the lowest gear stage in the shift region is neutral.

The single transmission is, for example, a type that performs shifting operations including shift up and shift down by power of a shift actuator. In this type, the shift actuator is controlled by the control device. The single transmission is, for example, an AMT (Automated Manual Transmission) that shifts according to a switch operation by the rider. However, the single transmission is not particularly limited and may be, for example, an automatic transmission (AT) that performs shifting operations according to a speed of the lean vehicle and a rotation speed of the engine.

Further, the single transmission is not particularly limited and may be, for example, a manual type that performs shift up or shift down by using an operation force of the rider to engage and disengage dogs.

### Advantageous Effects of Invention

According to the present teaching, it is possible to provide a vehicle that allows locking of a driving wheel when the engine is stopped, even with a normally open clutch mounted.

### Brief Description of Drawings

[FIG. 1] A block diagram showing an outline configuration of a vehicle according to First Embodiment.
[FIG. 2] A cross-sectional development view of the single transmission shown in FIG. 1, taken along a cross section passing through the vicinity of the shift cam.
[FIG. 3] A development view of the surface of the shift cam shown in FIG. 2.
[FIG. 4] A configuration diagram showing a state in which two gear sets are in an engaged state in the transmission shown in FIG. 2.
[FIG. 5] A block diagram showing an outline configuration of a vehicle according to Second Embodiment.

### Description of Embodiments

In the following, embodiments of the present teaching will be described with reference to the drawings.

### [First Embodiment]

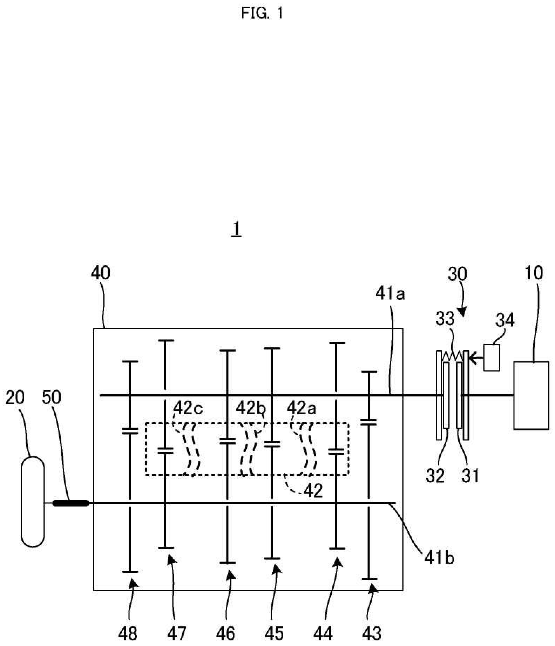

FIG. 1 is a block diagram showing an outline configuration of a vehicle according to First Embodiment. In FIG. 1, an outline configuration of a power train of the vehicle is mainly shown.

A vehicle 1 shown in FIG. 1 includes an engine 10, a driving wheel 20, a normally open clutch 30, and a single transmission 40.

The engine 10 outputs a drive torque. The engine 10 is an internal combustion engine. The engine 10 outputs a drive torque from a rotating crankshaft.

The driving wheel 20 rotates by receiving the drive torque of the engine 10.

The normally open clutch 30 performs disconnection and connection of a transmission path of the drive torque output from the engine 10. The normally open clutch 30 is connected to the engine 10.

The normally open clutch 30 enters an engaged state in which the normally open clutch 30 transmits the drive torque output from the engine 10, by receiving an external force for operation. The normally open clutch 30 enters a disengaged state when the external force disappears.

In the normally open clutch 30, two types of friction plates 31 and 32 are arranged in a state in which the two types of friction plates 31 and 32 are urged away from each other by the clutch spring 33. When an external force for operation is received, the two types of friction plates 31 and 32 come into contact with each other so as to press against each other in opposition to an elastic reaction force of the clutch spring 33. As a result, the drive torque is transmitted by a frictional force of the two types of friction plates 31 and 32. Then, the normally open clutch 30 enters the engaged state in which the normally open clutch 30 transmits the drive torque output from the engine 10.

When no external force is received, the two types of friction plates 31 and 32 separate from each other by the elastic reaction force of the clutch spring 33. The normally open clutch 30 enters the disengaged state in which the normally open clutch 30 does not transmit the drive torque output from the engine 10.

The normally open clutch 30 is, for example, a hydraulic clutch. The normally open clutch 30 has a hydraulic actuator 34. Hydraulic pressure is supplied from, for example, a pump provided in the engine 10 and is controlled by a valve. When the hydraulic actuator 34 supplies the hydraulic pressure that is an external force for operation, the normally open clutch 30 enters the engaged state. When the hydraulic actuator 34 stops supplying the hydraulic pressure that is an external force, the normally open clutch 30 enters the disengaged state. When the engine 10 stops, a supply source of the hydraulic pressure stops, and therefore a supply of the hydraulic pressure stops. Therefore, when the engine 10 is in a stopped state, the normally open clutch 30 is in the disengaged state.

The single transmission 40 is connected to the normally open clutch 30. The single transmission 40 converts a magnitude of the drive torque transmitted by the normally open clutch 30 at a ratio corresponding to a gear stage selected from a plurality of gear stages. In shifting, torque and rotation speed are linked. In other words, the single transmission converts a speed of rotation transmitted by the clutch at a ratio corresponding to a gear stage. The single transmission 40 is a single transmission in the vehicle 1 that can change a gear ratio supplied from the engine 10 to the driving wheel 20. The single transmission 40 outputs the converted drive torque to the driving wheel 20.

The single transmission 40 includes a single main shaft 41a, a single drive shaft 41b, a plurality of gear sets 43 to 48, and a shift cam 42. In other words, the vehicle 1 includes the single main shaft 41a and the single drive shaft 41b.

The single main shaft 41a is connected to the normally open clutch 30. The single main shaft 41a receives a drive torque from the normally open clutch 30.

The single drive shaft 41b outputs a converted drive torque to the driving wheel 20.

The plurality of gear sets 43 to 48 are provided corresponding to each of the plurality of gear stages. For example, in a case in which the single transmission 40 corresponds to six gear stages, the single transmission 40 has six gear sets 43 to 48. The gear sets 43 to 48 correspond to the gear stages from a first speed to a sixth speed, respectively.

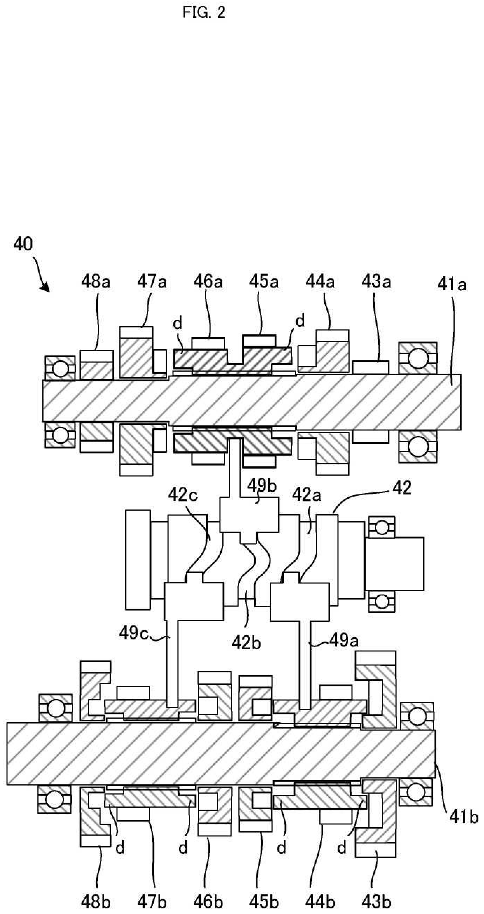

The plurality of gear sets 43 to 48 include main gears 43a to 48a and drive gears 43b to 48b, as shown in FIG. 2. The main gears 43a to 48a are provided on the single main shaft 41a. The drive gears 43b to 48b are provided on the single drive shaft 41b.

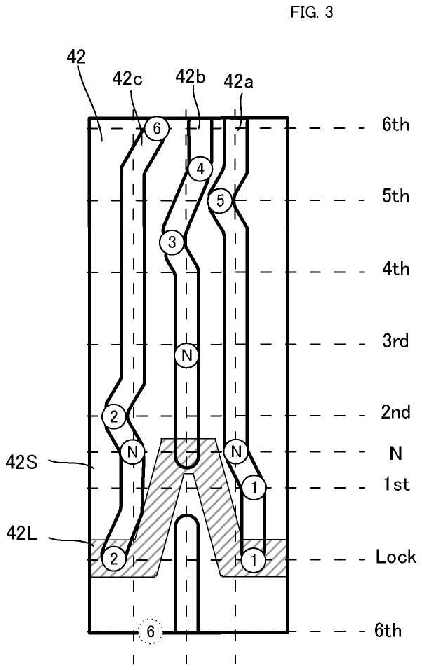

The shift cam 42 is a rotating body. The shift cam 42 has a cylindrical surface, and in a shift region 42S (see FIG. 3) on the cylindrical surface, cam grooves 42a to 42c are formed. The shift cam 42 rotates by a predetermined angle when the gear stage is changed. The shift cam 42 causes a gear set (any one of 43 to 48) of one gear stage corresponding to a position of the cam grooves 42a to 42c at a predetermined rotation angle to be in an engaged state. By one of the gear sets 43 to 48 entering the engaged state, the corresponding gear stage is selected. As a result, the drive torque is transmitted and converted at the corresponding gear stage.

The drive torque converted by the single transmission 40 is transmitted to the driving wheel 20 through a transmission section 50. The transmission section 50 has, for example, a drive shaft and a differential gear.

FIG. 2 is a cross-sectional development view of the single transmission shown in FIG. 1, taken along a cross section passing through the vicinity of the shift cam. FIG. 2 is a development view of a cross-section passing through a vicinity of the shift cam, and therefore the main gears 43a to 48a and the drive gears 43b to 48b in the gear sets 43 to 48 are depicted apart from each other.

Among the main gears 43a to 48a included in the plurality of gear sets 43 to 48, the main gears 43a, 45a, 46a, and 48a are provided to rotate integrally with the single main shaft 41a. The main gears 44a and 47a are provided to rotate freely relative to the single main shaft 41a.

Further, among the drive gears 43b to 48b, the drive gears 44b and 47b are provided to rotate integrally with the single drive shaft 41b. The drive gears 43b, 45b, 46b, and 48b are provided to rotate freely relative to the single drive shaft 41b. Further, the main gears 45a and 46a and the drive gears 44b and 47b are provided so as to be movable in the axial direction. Further, the main gears 45a and 46a and the drive gears 44b and 47b are provided with dogs d that move in an axial direction of the single main shaft 41a and engage with dog grooves of adjacent gears. In the state shown in FIG. 2, none of the dogs d is engaged with the dog grooves. In other words, in the state shown in FIG. 2, the single transmission 40 is in a neutral state.

By the main gears 45a and 46a and the drive gears 44b and 47b moving in an axial direction, the dogs d engage, and the drive torque is converted and transmitted through a gear stage of the engaged dogs d.

The cam grooves 42a to 42c formed on a surface of the shift cam 42 are respectively engaged with the shift forks 49a to 49c. The shift forks 49a to 49c are provided so as to be movable in the axial direction. The shift fork 49a moves in the axial direction integrally with the drive gear 44b. The shift fork 49b moves in the axial direction integrally with the main gears 45a and 46a. The shift fork 49c moves in the axial direction integrally with the drive gear 47b.

By the shift cam 42 rotating by a predetermined angle during a change of the gear stage, the main gears 45a and 46a and the drive gears 44b and 47b move in the axial direction along the cam grooves 42a to 42c, whereby the dogs d engage and the gear stage is selected.

In other words, the shift cam 42 causes a gear set (any one of 43 to 48) of one gear stage corresponding to a position of the cam grooves 42a to 42c at a predetermined rotation angle to be in an engaged state. By one of the gear sets 43 to 48 entering the engaged state, the corresponding gear stage is selected. That is, the drive torque is transmitted and converted at the corresponding gear stage.

FIG. 3 is a development view of the surface of the shift cam shown in FIG. 2.

On the surface of the shift cam 42, the cam grooves 42a to 42c are provided. The positions of 1st to 6th in FIG. 3 are positions at which the shift forks 49a and 49c engage when the respective gear stages are selected. In the cam grooves 42a to 42c, a neutral position indicated by "N" is also set between 1st and 2nd. For example, when neutral is selected, the shift cam 42 rotates so that the position of "N" moves/shifts to a position where the shift forks 49a and 49c engage. The shift forks 49a and 49c move to the position marked "N" in the cam grooves 42a and 42c. Since the shift fork 49b engages with the cam groove 42b at an angular position different from those of the remaining shift forks 49a and 49c, "N" is indicated in the cam groove 42b at an angular position deviated from "N" in the cam grooves 42a and 42c.

For example, when the shift cam 42 rotates and the shift forks 49a and 49c change their engagement positions from "N" and engage at "1st", the shift fork 49a moves. The drive gear 44b shown in FIG. 2 moves in the axial direction integrally with the shift fork 49a, and the dog d of the drive gear 44b engages with the drive gear 43b corresponding to the first speed. As a result, the single main shaft 41a and the single drive shaft 41b are coupled through the gear set 43 corresponding to the first speed.

In this way, the shift cam 42 essentially causes a gear set (any one of 43 to 48) of one gear stage corresponding to positions of the cam grooves 42a to 42c at a predetermined rotation angle to be in an engaged state. By one of the gear sets 43 to 48 entering the engaged state, the corresponding gear stage is selected. That is, the drive torque is transmitted and converted at the corresponding gear stage. The shift cam 42 causes the single transmission 40 to be in a neutral state at the neutral position "N" by keeping all of the gear sets 43 to 48 from entering the engaged state.

On the surface of the shift cam 42 of this embodiment, the shift region 42S and a lock region 42L are provided. The lock region 42L in FIG. 3 is the area indicated by the diagonal lines. The shift region 42S is the area other than the lock region 42L. The lock region 42L is adjacent to the shift region 42S on the cylindrical surface of the shift cam 42.

The cam grooves 42a to 42c of the shift cam 42 extend from the shift region 42S to the lock region 42L. The cam grooves 42a to 42c extend in the lock region 42L so as to cause gear sets corresponding to two or more gear stages among the plurality of gear stages (first speed to sixth speed) to be in the engaged state. The cam grooves 42a to 42c shown in the example in FIG. 3 extend up to the lock region 42L so as to cause the gear set 43 corresponding to the first speed and the gear set 48 corresponding to the second speed to be in the engaged state in the lock region 42L.

The cam grooves 42a to 42c in the lock region 42L extend from a position corresponding to the first speed, which is the lowest gear stage in the shift region 42S.

When the shift cam 42 rotates so that the selection position of the gear stage moves/shifts from the shift region 42S to the lock region, the gear set 43 corresponding to the first speed and the gear set 48 corresponding to the second speed enter the engaged state according to the positions of the cam grooves 42a to 42c in the lock region 42L. As a result, in the single transmission 40, the single main shaft 41a and the single drive shaft 41b are simultaneously coupled through two gear sets 43 and 48 having different gear ratios.

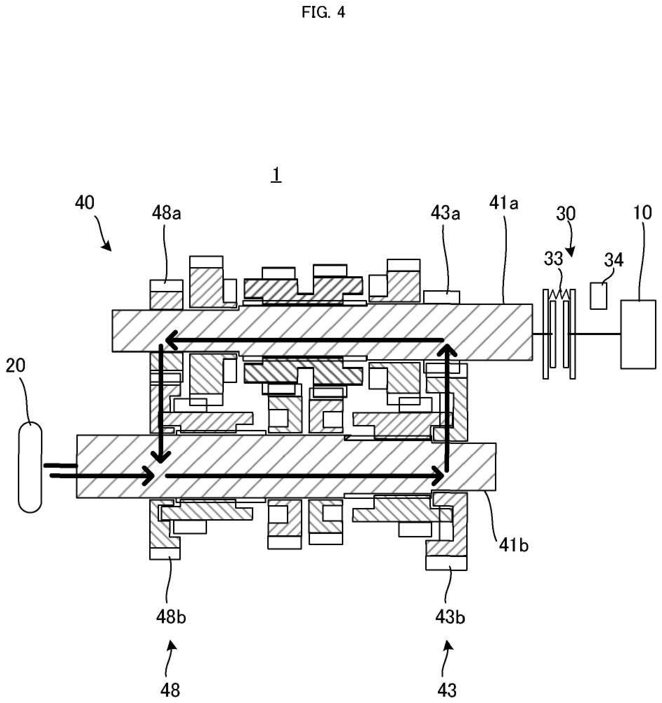

FIG. 4 is a configuration diagram showing a state in which two gear sets are in an engaged state in the transmission shown in FIG. 2. The example shown in FIG. 4 shows a state in which the gear set 43 corresponding to the first speed and the gear set 48 corresponding to the second speed are in the engaged state.

The gear ratio of the gear set 43 corresponding to the first speed that is in the engaged state is different from the gear ratio of the gear set 48 corresponding to the second speed in the engaged state. As shown by the arrows in FIG. 4, rotation from the driving wheel 20 is transmitted through the drive shaft 41b, the drive gear 43b corresponding to the first speed, the main gear 43a, and the main shaft 41a; however, when the rotation is converted by the main gear 48a and the drive gear 48b corresponding to the second speed, the rotation speed becomes inconsistent with the original rotation speed of the drive shaft 41b. Therefore, the rotations of the single main shaft 41a and the single drive shaft 41b are locked.

The rotations of the single main shaft 41a and the single drive shaft 41b are locked regardless of the state of the normally open clutch 30. The rotations of the single main shaft 41a and the single drive shaft 41b are locked even when the normally open clutch 30 is in the disengaged state. By the single drive shaft 41b being locked, the driving wheel 20 is locked regardless of the presence or absence of operation of the engine 10. For example, even when the normally open clutch 30 is in the disengaged state without receiving an external force for operation such as hydraulic pressure or rotational force of the engine 10, the driving wheel 20 is locked.

As a result, when the engine 10 is stopped, the vehicle 1 is capable of locking the driving wheel 20 even though the normally open clutch 30 is mounted.

The cam grooves 42a to 42c shown in FIG. 3 extend and are formed up to the lock region 42L so as to cause the gear sets 43 and 48 corresponding to two or more gear stages including the first speed among the plurality of gear stages to be in the engaged state.

The first speed has the maximum gear ratio in the single transmission. By the gear sets 43 and 48 corresponding to gear stages including the first speed, which has the maximum gear ratio, entering the engaged state at the time of locking of the driving wheel 20, the locking of the driving wheel 20 becomes stronger.

Further, as shown in FIG. 3, the cam grooves 42a to 42c in the lock region 42L extend from a position corresponding to the first speed, which is the lowest gear stage in the shift region 42S. As a result, when a shift down operation is performed in the single transmission 40, the driving wheel 20 is locked in an operation subsequent to the first speed, which is the lowest speed. Therefore, when the vehicle 1 stops, the driving wheel 20 can be locked as an extension of the normal shift down operation.

### [Second Embodiment]

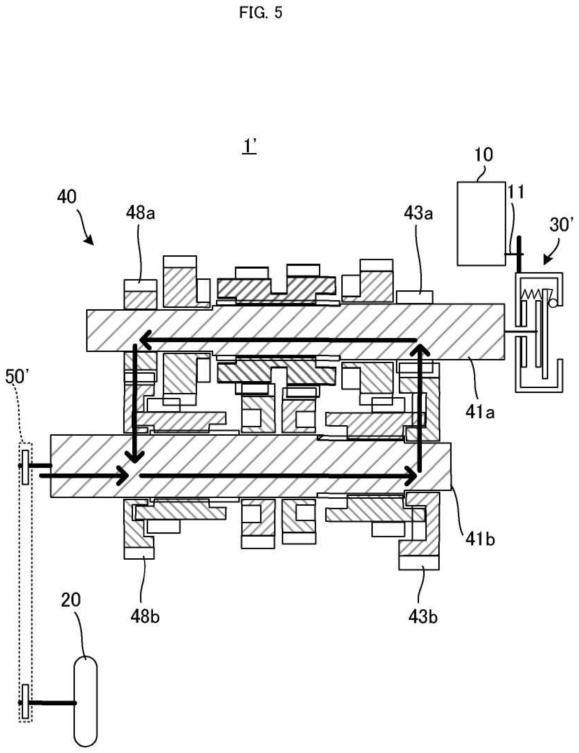

FIG. 5 is a block diagram showing an outline configuration of a vehicle according to Second Embodiment.

The vehicle 1' shown in FIG. 5 is a straddled vehicle. The straddled vehicle is a form of vehicle in which the driver sits astride the saddle. Further, the normally open clutch 30' is, for example, a centrifugal clutch. The centrifugal clutch enters the engaged state to transmit the drive torque when the rotation speed of the engine 10 exceeds a certain value, and enters the disengaged state when the rotation speed falls below a certain value. The normally open clutch 30', which is a centrifugal clutch, is arranged coaxially with the single main shaft 41a. The transmission section 50' has, for example, a chain or a belt.

These points are different from those of the first embodiment. Other points in this embodiment are the same as those in the first embodiment. Therefore, elements that are common to the first embodiment are given the same reference characters, and the explanation is omitted.

A centrifugal clutch can achieve a normally open clutch without a large and heavy mechanism such as a hydraulic mechanism or an electric actuator, for example. Therefore, in the vehicle 1' including the lightweight centrifugal clutch, locking of the driving wheel 20 when the engine 10 is stopped becomes possible. A straddled vehicle that turns with movement of the posture of the driver is desired to be small and lightweight for light operability. In the vehicle 1', which is a straddled vehicle including the lightweight centrifugal clutch, locking of the driving wheel 20 when the engine 10 is stopped becomes possible.

Further, when the normally open clutch 30', which is a centrifugal clutch, is arranged coaxially with the single main shaft 41a, the centrifugal clutch is positioned on a shaft different from the crankshaft 11 of the engine 10. The normally open clutch 30', which is a centrifugal clutch, can be configured to rotate at a rotation speed that is subjected to primary reduction relative to the crankshaft 11. For this reason, using an increase in the rotation speed of the normally open clutch 30', which is lower than the crankshaft 11 of the engine 10, as a reference, the disengaged state of the normally open clutch 30' can be maintained for a longer time. As a result, wear of the normally open clutch 30', which is a centrifugal clutch, and wear of the single transmission 40 can be suppressed.

Further, a centrifugal clutch can achieve a normally open clutch without a large and heavy mechanism such as a hydraulic mechanism, for example. A vehicle 1', which is a straddled vehicle that turns with movement of the posture of the driver, is desired to be small and lightweight for light operability. Even when the normally open clutch 30', which can be easily reduced in weight, is mounted, locking of the driving wheel 20 when the engine 10 is stopped becomes possible.

### Reference Signs List

- 1, 1':: vehicle
- 10:: engine
- 20:: driving wheel
- 30, 30':: normally open clutch
- 40:: single transmission
- 41a:: single main shaft
- 41b:: single drive shaft
- 42:: shift cam
- 42L:: lock region
- 42S:: shift region
- 42a to 42c:: cam groove
- 43 to 48:: gear set
- 43a to 48a:: main gear
- 43b to 48b:: drive gear

## Claims

1. A vehicle (1, 1'), comprising:
an engine (10) configured to output a drive torque;
a driving wheel (20) configured to rotate by receiving the drive torque of the engine (10);
a clutch (30, 30') connected to the engine (10), the clutch (30, 30') is configured for entering an engaged state that transmits the drive torque output from the engine (10) when an external force is received and entering a disengaged state when the external force disappears;
a single transmission (40) connected to the clutch (30, 30') and configured to convert a magnitude of the drive torque transmitted by the clutch (30, 30') at a ratio according to a gear stage selected from a plurality of gear stages, and to output the converted magnitude of drive torque to the driving wheel (20),
wherein the single transmission (40) comprises
a main shaft (41a) connected to the clutch (30, 30') and configured to receive the drive torque from the clutch (30, 30'),
a drive shaft (41b) configured to output the converted magnitude of the drive torque to the driving wheel (20),
a plurality of gear sets (43 to 48) provided so as to respectively correspond to the plurality of gear stages, each of the plurality of gear sets (43 to 48) including a main gear (43a to 48a) provided on the single main shaft (41a) and a drive gear (43b to 48b) provided on the single drive shaft (41b), and
a shift cam (42) that is a rotating body having a at least one cam groove (42a to 42c) formed in a shift region (42S) on a cylindrical surface, the shift cam (42) is configured for causing a gear set (43 to 48) of one or less gear stages, among the plurality of gear stages, which corresponds to the position of the cam groove (42a to 42c) at a predetermined rotation angle to be in an engaged state, and
wherein the cam groove (42a to 42c) extends up to a lock region (42L) adjacent to the shift region (42S) and extended from the shift region (42S), and in the lock region (42L), the cam groove (42a to 42c) is formed to extend up to the lock region (42L) so as to cause the gear sets (43 to 48) corresponding to two or more gear stages among the plurality of gear stages provided in the single transmission (40) to be in the engaged state.

2. The vehicle (1') according to claim 1, wherein the clutch is a centrifugal clutch (30').

3. The vehicle (1') according to claim 2, wherein the centrifugal clutch (30') is arranged coaxially with the main shaft (41a).

4. The vehicle (1, 1') according to any one of claims 1 to 3, wherein the cam groove (42a), in the lock region (42L), extends and is formed up to the lock region (42L) so as to cause the gear sets (43 to 48) corresponding to two or more gear stages including a first speed among the plurality of gear stages to be in the engaged state.

5. The vehicle (1, 1') according to any one of claims 1 to 4, wherein the cam groove (42a to 42c) in the lock region (42L) extends from a position corresponding to a lowest gear stage in the shift region (42S).

6. The vehicle (1, 1') according to any one of claims 1 to 5, wherein the vehicle (1, 1') is a straddled vehicle (1, 1').

7. The vehicle (1, 1') according to any one of claims 1 to 6, wherein the shift cam (42) is provided with at least two cam groove (42a, 42c) formed in a shift region (42S) on a cylindrical surface, wherein the cam grooves (42a, 42c) extends up to the lock region (42L) adjacent to the shift region (42S) and extended from the shift region (42S), and in the lock region (42L), the cam grooves (42a, 42c) are formed to extend up to the lock region (42L) so as to cause the gear sets (43, 48) corresponding to two or more gear stages among the plurality of gear stages provided in the transmission (40) to be in the engaged state.

8. The vehicle (1, 1') according to any one of claims 1 to 7, wherein the clutch is a normally open clutch (30, 30').
